# FASCICULE DE BREVET EUROPEEN

(11) **EP 0 639 775 B1**
(45) Date de publication et mention de la délivrance du brevet: **03.03.1999**
(21) Numéro de dépôt: 94401874.6
(22) Date de dépôt: 18.08.1994
(51) Int. Cl.: G01N 35/02, G21F 7/06, G01T 7/10

(54) **Dispositif de stockage d'objects cylindriques, à chargement et déchargement rapides**
Vorrichtung zur Lagerung von zylindrischen Gegenständen, mit schneller Be- und Entladung
Device for storing cylindrical objects, with rapid loading and unloading

(30) Priorité: 20.08.1993 FR 9310149
(43) Date de publication de la demande: 22.02.1995
(73) Titulaire: COMPAGNIE GENERALE DES MATIERES NUCLEAIRES (COGEMA), F-78141 Velizy-Villacoublay Cédex (FR)
(72) Inventeur: Besnier, Joseph, F-50440 Acqueville (FR)
(74) Mandataire: Poulin, Gérard

(56) Documents cités:
- EP-A- 0 180 494
- WO-A-83/00393
- FR-A- 1 319 542
- US-A- 3 504 376
- US-A- 3 751 985
- US-A- 4 634 575

## Description

L'invention concerne un dispositif conçu pour stocker des objets à configuration sensiblement cylindrique dans un volume restreint et d'une manière telle que ces objets puissent être chargés et déchargés rapidement.

Le dispositif de stockage conforme à l'invention peut être utilisé dans de très nombreux domaines industriels, à chaque fois qu'un stockage tampon est nécessaire dans un volume relativement restreint, à l'intérieur d'une installation automatisée.

Une application préférentielle de l'invention concerne le stockage de cruchons contenant des produits chimiques tels que des produits radioactifs, préalablement à leur analyse, à l'intérieur d'une cellule étanche dans laquelle cette analyse doit être effectuée. Plus précisément, cette application concerne une installation automatisée telle que celle qui est décrite dans le document FR-A-2 675 582, dans laquelle des échantillons liquides sont prélevés de manière automatisée en différents points d'une chaîne de fabrication ou de traitement, introduits dans des cruchons, et transférés automatiquement vers des boîtes d'analyses par des circuits de transfert pneumatiques.

Dans une telle installation, les cruchons contenant les échantillons à analyser chutent directement dans le fond des boîtes d'analyses. Cela entraîne un certains nombre de problèmes qui vont à présent être exposés.

Un premier problème concerne l'identification des cruchons, qui se fait par lecture d'un code porté par chacun d'entre eux. Etant donné que tous les cruchons se trouvent en vrac dans le fond de la boîte d'analyses, l'opérateur doit donc rechercher à l'aide de pinces le cruchon qui l'intéresse. Cette opération fastidieuse est encore compliquée par les déformations optiques du hublot au travers duquel l'opérateur lit les codes portés sur les cruchons.

Un autre problème découle du fait qu'au cours de leur transport et lorsqu'ils parviennent dans la boîte d'analyses, les cruchons sont logés dans un conteneur sur lequel est porté le code d'identification précité. Pour effectuer l'analyse, l'opérateur doit donc successivement sortir le cruchon du conteneur, puis ouvrir le cruchon. Cela constitue une source d'erreurs. Afin d'éviter ces erreurs, l'opérateur place le plus souvent les cruchons dans un râtelier à trous, après les avoir extraits de leurs conteneurs, et il note les codes des échantillons correspondant à ces trous sur un papier collé à l'extérieur de la boîte. Cependant, cela alourdit les procédures, notamment en cas de changement d'équipe.

Un autre problème a pour origine l'écoulement des liquides analytiques qui s'effectue habituellement par le fond de la boîte vers un système de siphon. Dès que les cruchons chutent dans la boîte d'analyses, ils sont contaminés extérieurement par ces liquides analytiques. Au moment de l'ouverture des cruchons, cette contamination extérieure peut apporter une pollution de l'intérieur du cruchon. Le résultat de l'analyse devient alors faux.

Dans une installation telle que celle qui est décrite dans le document FR-A-2 675 582, certains des cruchons qui parviennent dans une boîte d'analyses donnée doivent être réexpédiés vers d'autres boîtes d'analyses sans avoir été ouverts. La contamination extérieure des cruchons due à leur contact avec les liquides analytiques qui s'écoulent dans le fond de la boîte d'analyses pollue alors les réseaux de transfert pneumatiques qui deviennent irradiants vis-à-vis du personnel. Pour remédier à cet inconvénient, on doit donc procéder, à l'intérieur de la boîte d'analyses, à un transfert des échantillons contenus dans les cruchons contaminés extérieurement dans des cruchons non contaminés. Pour cela, on utilise par exemple un dispositif de transfert tel que celui qui est décrit dans le document FR-A-2 679 035. Cependant, si l'utilisation d'un tel dispositif de transfert permet de protéger le personnel vis-à-vis de l'irradiation, cela se traduit par la création de déchets solides supplémentaires que constituent les cruchons irradiés extérieurement.

Dans de nombreux secteurs industriels, le problème du stockage provisoire d'objets de forme généralement cylindrique est résolu en ayant recours à des dispositifs de stockage comprenant un râtelier rotatif, d'axe vertical, présentant sur sa périphérie une ou plusieurs rangées d'alvéoles cylindriques dont les axes sont également verticaux. Le chargement et le déchargement des objets s'effectue verticalement, généralement par le haut des alvéoles. Dans certains cas, les objets peuvent être évacués par le fond des alvéoles.

Cette configuration, généralement satisfaisante, a toutefois pour inconvénient d'imposer au diamètre extérieur du râtelier un encombrement qui peut être excessif lorsqu'on augmente le nombre des alvéoles. Ce problème devient particulièrement délicat lorsque l'on envisage d'utiliser un tel dispositif de stockage à l'intérieur d'une boîte d'analyses appelée à contenir un certain nombre d'autres dispositifs dans un volume restreint.

L'invention a précisément pour objet un dispositif de stockage permettant de stocker un nombre relativement élevé d'objets de forme sensiblement cylindrique dans un diamètre limité, de façon notamment à pouvoir être utilisé dans une boîte d'analyses d'une installation telle que celle qui est décrite dans le document FR-A-2 675 582, en résolvant les problèmes précités, posés par la chute des cruchons dans le fond de cette boîte.

Conformément à l'invention, cet objectif est atteint au moyen d'un dispositif de stockage d'objets à configuration sensiblement cylindrique, comprenant :
- au moins un râtelier de stockage apte à tourner autour d'un axe vertical et pourvu d'alvéoles aptes à recevoir les objets, circonférentiellement réparties autour de cet axe vertical ; et
- des moyens de commande de rotation du râtelier autour dudit axe ;
- les alvéoles sont ouvertes radialement vers l'extérieur, de façon à permettre une introduction et une extraction radiales des objets. Un tel dispositif est connu du document US-A-3 504 376. L'invention est caractérisée par le fait que :
   - chaque alvéole présente un axe incliné de façon à couper l'axe vertical du râtelier au dessus de ce dernier.

Grâce à cet agencement, le chargement et le déchargement des objets dans les alvéoles sont effectués radialement, ce qui permet d'envisager la superposition de plusieurs râteliers de stockage dans un volume restreint. L'échappement accidentel des objets est empêchée par l'inclinaison des axes des alvéoles.

Avantageusement, un organe éjecteur est placé dans chaque alvéole et comporte une partie active apte à être animée d'un mouvement sensiblement radial par rapport à l'axe vertical du râtelier, entre une position escamotée et une position d'éjection.

L'organe éjecteur peut notamment être constitué par un levier basculant monté pivotant sur un axe horizontal placé dans le haut de l'alvéole et orienté perpendiculairement à une direction radiale par rapport à l'axe vertical du râtelier. La partie active est alors constituée par une première branche du levier normalement orientée vers le bas parallèlement à l'axe de l'alvéole et le long de la paroi de cette dernière la plus proche de l'axe vertical du râtelier, à partir de l'axe de pivotement du levier.

Le levier basculant comporte également une deuxième branche normalement orientée radialement vers l'axe vertical du râtelier et selon une direction sensiblement horizontale. Des moyens d'éjection sont prévus pour exercer une poussée vers le bas sur la deuxième branche du levier.

Ces moyens d'éjection comprennent avantageusement un vérin monté sur un support et une tige de poussée verticale apte à se déplacer parallèlement à elle-même lors d'un actionnement du vérin. Une extrémité basse de cette tige de poussée est placée au-dessus de la deuxième branche du levier basculant associée à une alvéole située au droit d'un poste d'éjection du dispositif.

Le dispositif comprend avantageusement deux râteliers de stockage disposés coaxialement l'un au-dessus de l'autre. Les alvéoles des deux râteliers sont alors décalées angulairement autour de leur axe vertical et les moyens d'éjection comprennent, pour chaque alvéole du râtelier inférieur, un tronçon de tige verticale monté coulissant entre deux alvéoles du râtelier supérieur et dont l'extrémité basse affleure la deuxième branche du levier basculant de ladite alvéole du râtelier inférieur. Les moyens d'éjection comprennent également un moyen de rappel du tronçon de tige verticale dans une position haute.

Avantageusement, des moyens sont également prévus pour déplacer les râteliers de stockage parallèlement à leur axe vertical, afin de permettre une introduction et une extraction des objets à un niveau constant.

On décrira à présent, une forme de réalisation préférentielle de l'invention, en se référant aux dessins annexés, dans lesquels :
- la figure 1 représente, en coupe verticale, un dispositif de stockage conforme à l'invention, placé dans une boîte d'analyses ; et
- la figure 2 est une vue en coupe schématique selon la ligne II-II de la figure 1 illustrant notamment le poste de chargement et le poste d'éjection du dispositif.

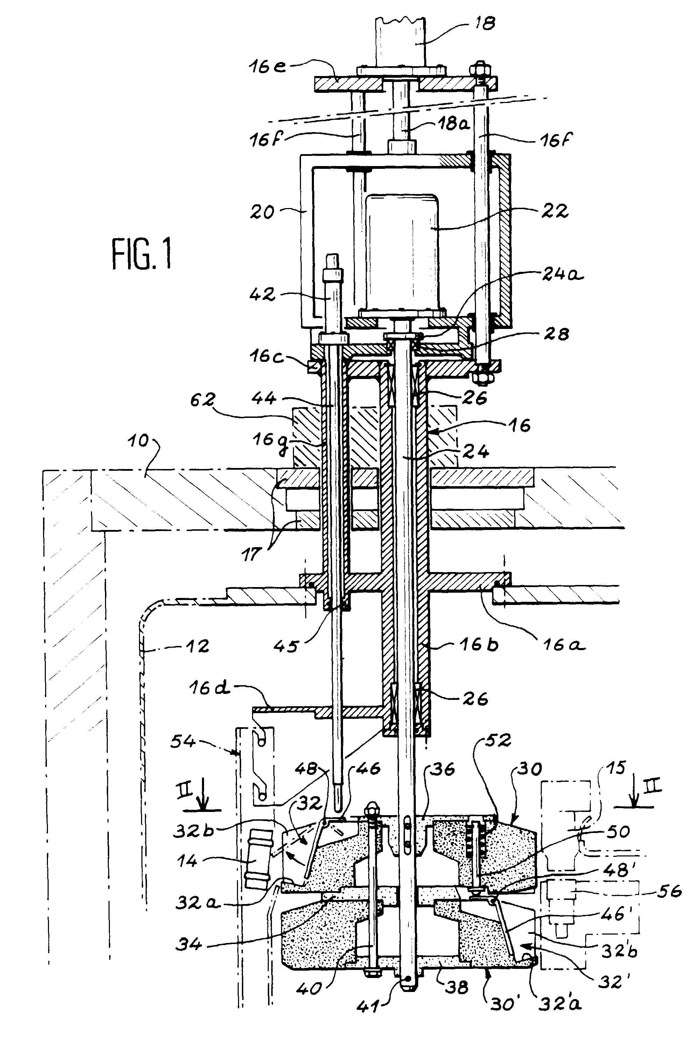

Sur la figure 1, on a représenté une partie de la paroi 10 de la cellule de confinement étanche d'une boîte d'analyses utilisable dans l'industrie nucléaire. Cette paroi 10 est doublée intérieurement d'une peau métallique 12. La boîte d'analyses partiellement représentée sur la figure 1 est prévue pour recevoir des cruchons 14 contenant un échantillon d'un produit radioactif, généralement à l'état liquide, dont on désire effectuer l'analyse. Les cruchons 14 pénètrent à l'intérieur de la boîte d'analyses, par exemple par un tube vertical (non représenté) qui débouche dans un réceptacle 15 tel que celui qui est décrit dans le document FR-A-2 675 582.

Conformément à l'invention, ce réceptacle est placé à proximité des râteliers de stockage 30,30' d'un dispositif de stockage associé à la boîte d'analyses. Alors que les râteliers de stockage 30,30' sont situés à l'intérieur de la boîte d'analyses, les différents organes de commande (actionneurs) et de contrôle (capteurs) sont situés à l'extérieur de celle-ci. Cet agencement permet d'utiliser des actionneurs et des capteurs industriels, et non des appareils spécifiques de laboratoire. Ainsi, la maintenance peut être effectuée par les équipes habituelles des ateliers.

Par ailleurs, le positionnement des actionneurs et des capteurs à l'extérieur de la boîte d'analyse permet de limiter les coûts de mise en déchets de ces appareils en cas de panne ou de disfonctionnement.

Le dispositif de stockage illustré sur la figure 1 comprend un support 16, traversant les parties supérieures horizontales de la paroi 10 et de la peau métallique 12 et il est fixé à cette dernière. De façon plus précise, le support 16 comprend un disque horizontal inférieur 16a, apte à être fixé par des vis (non représentées) sur la peau métallique 12, autour d'une ouverture circulaire formée dans la partie horizontale de cette peau. Le montage du disque 16a est effectué au travers d'une ouverture circulaire formée dans la partie horizontale de la paroi 10, cette ouverture étant normalement fermée par un bouchon 17 en deux parties.

Le support 16 comporte également, selon l'axe du disque 16a, un tube vertical 16b dont l'extrémité haute est fixée au centre d'un disque horizontal intermédiaire 16c placé à l'extérieur de la boîte d'analyses. A son extrémité basse, située dans la boîte d'analyses, le tube vertical 16b supporte un bras de suspension 16d.

Au-dessus du disque horizontal intermédiaire 16c, le support 16 comporte un disque horizontal supérieur 16e, relié fixement au disque 16c par des colonnes de guidage verticales 16f.

Sur sa face supérieure, le disque horizontal supérieur 16e supporte un vérin 18, par exemple de type pneumatique. La tige 18a du vérin 18 fait saillie verticalement vers le bas au travers du disque horizontal 16e et porte à son extrémité basse un support mobile 20 sur lequel est monté un moteur pas-à-pas 22. Plus précisément, le support mobile 20 portant le moteur pas-à-pas 22 est reçu de façon coulissante sur les colonnes de guidage verticales 16f, de façon à pouvoir se déplacer entre une position haute et une position basse lors de l'actionnement du vérin 18.

Le moteur pas-à-pas 22 entraîne en rotation un arbre de commande vertical 24, ce dernier étant monté dans le tube 16b du support 16 de façon à pouvoir s'y déplacer librement en rotation et en translation. Pour cela, l'arbre de commande 24 est supporté à chacune des extrémités du tube 16b par des douilles à bille 26 équipées de joints d'étanchéité. En outre, la douille 26 située à l'extrémité inférieure du tube 16b est équipée d'un joint racleur (non représenté).

Afin de reprendre les efforts dus aux charges suspendues à l'extrémité inférieure de l'arbre de commande 24, celui-ci prend appui par une collerette 24a sur le support mobile 20, par l'intermédiaire d'une butée à bille 28.

L'extrémité de l'arbre de commande 24 qui fait saillie vers le bas au-delà de l'extrémité basse du tube 16b supporte deux râteliers de stockage superposés 30 et 30' formant la partie active du dispositif de stockage, à l'intérieur de la boîte d'analyses. Le râtelier supérieur 30 comme le râtelier inférieur 30' sont constitués par deux plateaux circulaires horizontaux qui sont fixés selon leur axe vertical commun à l'extrémité inférieure de l'arbre de commande 24, de façon à pouvoir tourner autour de l'axe vertical de cet arbre lorsque le moteur pas-à-pas 22 est actionné.

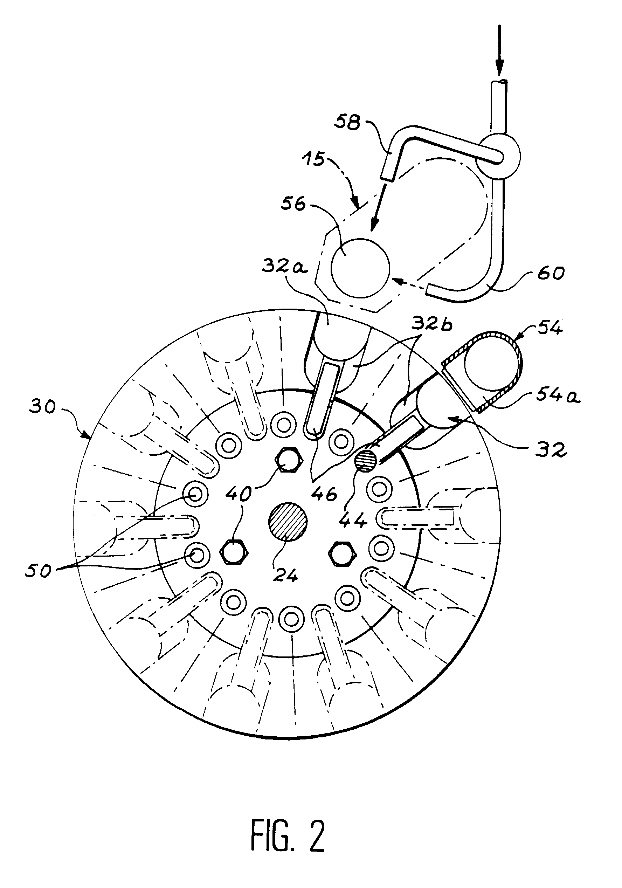

L'épaisseur de chacun des plateaux formant les râteliers 30 et 30' est légèrement supérieure à la longueur de chacun des cruchons 14, de telle sorte que ces derniers peuvent être reçus dans des alvéoles 32, 32' régulièrement réparties sur la circonférence de chacun des râteliers 30, 30'. Ainsi et comme l'illustre à titre d'exemple la figure 2, chacun des râteliers 30 et 30' peut comporter dix (ou des multiples de cinq) alvéoles 32, 32' de dimensions identiques sur sa périphérie.

Chacune des alvéoles 32, 32' est ouverte vers le haut et radialement vers l'extérieur par rapport à l'axe vertical de l'arbre de commande 24. En outre, chaque alvéole 32, 32' présente un axe incliné selon un même angle déterminé, par exemple d'environ 30°, de façon à couper l'axe vertical commun aux râteliers 30 et 30' au-dessus de ces derniers. Chaque alvéole 32, 32' comporte un fond plan 32a, 32'a perpendiculaire à l'axe de l'alvéole considérée ainsi qu'une paroi latérale 32b, 32'b à section en forme de U, ouverte radialement vers l'extérieur par rapport à l'axe vertical des râteliers.

Les caractéristiques qui viennent d'être décrites permettent d'introduire les cruchons 14 radialement dans les alvéoles 32, 32' et de les en extraire de la même manière. Il est ainsi possible, dans l'encombrement restreint qui correspond à la superposition des râteliers 30 et 30', de stocker une quantité relativement importante de cruchons (vingt dans l'exemple considéré). Le caractère incliné de l'axe de chacune des alvéoles 32, 32' permet toutefois d'éviter tout risque d'échappement accidentel des cruchons 14 lors d'une rotation des râteliers de stockage 30 et 30' commandée par le moteur pas-à-pas 22.

Dans la forme de réalisation illustrée sur la figure 1, les râteliers de stockage 30 et 30' sont réalisés, par exemple, en matière plastique évidée, afin que le poids suspendu à l'arbre de commande vertical 24 soit aussi réduit que possible.

Le râtelier supérieur 30 repose sur le râtelier inférieur 30' par l'intermédiaire d'un flasque 34 et l'ensemble ainsi formé est placé entre un flasque supérieur 36 et un flasque inférieur 38 et assemblé au moyen de boulons verticaux 40. Cet ensemble est solidarisé en rotation de l'arbre de commande vertical 24 par exemple au moyen d'une goupille télé démontable 41 traversant cet arbre en dessous du flasque inférieur 38.

L'assemblage du râtelier de stockage supérieur 30 et du râtelier de stockage inférieur 30' au moyen des boulons 40 est réalisé de telle sorte qu'il existe un décalage d'un demi pas entre les alvéoles 32 du râtelier 30 et les alvéoles 32' du râtelier 30'. En d'autres termes, chacune des alvéoles 32 du râtelier de stockage supérieur 30 est située en vue de dessus entre deux alvéoles du râtelier de stockage inférieur 30', à égale distance de chacune de ces alvéoles. Cet agencement permet, comme on va à présent le décrire, de commander indifféremment à l'aide d'un vérin unique l'éjection de cruchons placés dans les réceptacles 32 du râtelier de stockage supérieur 30 comme l'éjection de cruchons placés dans les réceptacles 32' du râtelier de stockage inférieur 30'.

Comme l'illustre la figure 1, les moyens d'éjection servant à commander l'éjection des cruchons 14 comprennent un vérin unique 42, par exemple de type pneumatique, monté sur le support mobile 20. Lorsqu'il est actionné, ce vérin 42 commande le déplacement selon son axe, vers le bas ou vers le haut, d'une tige de poussée verticale 44 dont l'axe est décalé par rapport à l'axe vertical de l'arbre de commande 24. Plus précisément, la tige de poussée 44 fait saillie vers le bas et pénètre à l'intérieur de la boîte d'analyses au travers d'un fourreau 16g dont les extrémités sont fixées aux disques inférieur 16a et intermédiaire 16c du support 16 et qui traverse le bouchon 18.

Un système d'étanchéité tel qu'un ou plusieurs joints racleurs 45 est monté dans l'extrémité inférieure du fourreau 16g, de façon à être en contact étanche avec la tige de poussée 44.

A l'intérieur de la boîte d'analyse, la tige de poussée 44 est guidée par le bras de suspension 16d et son axe vertical est situé en un emplacement angulaire fixe qui coupe en permanence l'axe de l'une des alvéoles 32 du râtelier de stockage supérieur 30 ou de l'une des alvéoles 32' du râtelier de stockage inférieur 30'.

Un organe éjecteur constitué par un levier basculant 46, 46' est monté dans chacune des alvéoles 32, 32' des râteliers 30 et 30' respectivement. Chacun des leviers basculant 46 et 46' est monté sur le râtelier 30, 30' qui lui correspond par un axe de pivotement horizontal 48, 48'. Plus précisément, chaque levier 46, 46' a la forme d'un V dont le sommet pivote autour de l'axe 48, 48', cet axe étant placé dans le haut de l'alvéole 32, 32' correspondante et orienté perpendiculairement à une direction radiale par rapport à l'axe vertical commun aux râteliers 30 et 30'.

Chacun des leviers basculant 46, 46' comporte une partie active, constituée par une branche relativement longue qui repose normalement par gravité dans le fond du U présenté en section par la paroi latérale 32b, 32'b de l'alvéole 32, 32' correspondante. Cette branche est alors orientée vers le bas à partir de l'axe de pivotement 48, 48' parallèlement à l'axe de l'alvéole et le long de la paroi de cette dernière la plus proche de l'axe vertical des râteliers 30 et 30'.

Chacun des leviers basculants 46, 46' comprend également une deuxième branche qui est normalement orientée radialement vers l'axe vertical commun aux râteliers 30 et 30' et selon une direction sensiblement horizontale, à partir de l'axe de pivotement 48, 48'.

Comme l'illustre la figure 1, lorsque c'est l'une des alvéoles 32 du râtelier de stockage supérieur 30 dont l'axe coupe la tige de poussée 44, l'extrémité inférieure de cette tige est située immédiatement au-dessus de l'extrémité de la branche 46 située dans l'alvéole 32 correspondante, lorsque la tige de poussée 44 est en position haute. Par conséquent, la descente de la tige de poussée 44 commandée par le vérin 42 a pour effet de faire pivoter le levier 46 dans le sens des aiguilles d'une montre en considérant la figure 1, comme on l'a illustré en traits mixtes sur cette figure. Il est à noter que ce pivotement est rendu possible par le fait que le râtelier 30 est évidé en dessous de la branche horizontale de chacun des leviers basculants 46. Ce pivotement a pour conséquence d'écarter radialement vers l'extérieur la branche formant la partie active du levier 46 correspondant, ce qui conduit à chasser radialement vers l'extérieur le cruchon 14 précédemment logé dans cette alvéole.

Lorsque l'axe de la tige de poussée 44 coupe l'axe d'une alvéole 32' du râtelier inférieur 30', un moyen doit être prévu pour que la descente de la tige 44 soit transmise au levier basculant 46' associé à cette alvéole. A cet effet, un tronçon de tige verticale 50 est monté coulissant dans le râtelier de stockage supérieur 30, au-dessus de l'extrémité de la branche supérieure horizontale de chacun des leviers basculants 46' montés sur le râtelier de stockage inférieur 30'. Un ressort de rappel 52 est interposé entre chacun des tronçons de tige verticale 50 et le râtelier de stockage supérieur 30, de façon à maintenir les tronçons 50 normalement dans une position haute telle qu'illustrée sur la figure 1. Dans cette position, l'extrémité inférieure de chacun des tronçons de tige 50 affleure la branche supérieure horizontale du levier basculant 46' qui lui correspond. Les leviers basculants 46' occupent alors leur position rétractée permettant le chargement d'un cruchon 14 dans l'alvéole 32' correspondante. Par ailleurs, l'extrémité haute de chacun des tronçons de tige 50 est alors à un niveau légèrement inférieur à celui de l'extrémité basse de la tige de poussée 44.

Lorsque la rotation pas-à-pas des râteliers 30 et 30' commandée par le moteur 22 amène l'axe de l'une des alvéoles 32' à couper l'axe de la tige de poussée 44, le tronçon de tige verticale 50 situé au-dessus de cette alvéole 32' se trouve alors dans le prolongement de l'extrémité basse de la tige de poussée 44. Par conséquent, lorsqu'un déplacement vers le bas de cette dernière est commandé par le vérin 42, le tronçon de tige verticale 50 est repoussé vers le bas à l'encontre du ressort 52, ce qui a pour effet de faire basculer le levier 46' autour de son axe 48'. Si un cruchon 14 se trouve dans l'alvéole 32' correspondante, ce cruchon est alors évacué radialement vers l'extérieur.

Dans la forme de réalisation illustrée sur les figures 1 et 2, le poste d'éjection des cruchons 14 est matérialisé par une goulotte verticale 54 située dans le plan radial passant par les axes de l'arbre de commande 24 et de la tige de poussée 44. Cette goulotte 54 est supportée par le bras de suspension 16d du support fixe 16 et présente une fenêtre 54a (figure 2) ouverte vers l'axe des râteliers de stockage 30 et 30'. De façon plus précise, cette fenêtre se trouve au niveau du râtelier de stockage supérieur 30 lorsque les deux râteliers sont en position basse comme illustré sur la figure 1 ou en face du râtelier de stockage inférieur 30' lorsque les deux râteliers sont en position haute. La commande du déplacement vertical des râteliers 30 et 30' entre ces deux positions est assurée par le vérin 18.

Le poste de chargement des râteliers de stockage 30 et 30' est situé au même niveau que la fenêtre 54a formée dans la goulotte 54. Il est matérialisé par le réceptacle 15, déjà cité, et par un peson 56 sur lequel viennent chuter les cruchons 14 par gravité. Ce poste de chargement comporte également un injecteur d'air comprimé 58 (figure 2) apte à émettre un jet d'air comprimé permettant de propulser radialement vers l'alvéole 32 ou 32' situé en face du peson 56 le cruchon posé sur ce dernier. Comme l'illustre schématiquement la figure 2, un deuxième éjecteur d'air comprimé 60 peut être prévu, afin d'évacuer vers un autre dispositif (non illustré) les cruchons dont le stockage n'est pas souhaité.

Il est à noter que l'injecteur d'air comprimé utilisé pour charger les râteliers de stockage présente un coût et un encombrement très faible, à la différence d'un organe mécanique dont l'utilisation serait pénalisante, voire impossible, et ralentirait le débit.

Le fonctionnement du dispositif selon l'invention va à présent être décrit en se référant aux figures 1 et 2.

Lorsqu'un cruchon arrive dans la boîte d'analyses, il chute sur le peson 56. Si ce cruchon doit être stocké et si l'alvéole 32 ou 32' qui se trouve en face de l'éjecteur 58 n'est pas libre, on commande une rotation des râteliers 30 et 30' à l'aide du moteur pas-à-pas 22, éventuellement combinées à une montée ou une descente des râteliers 30 et 30' commandé par le vérin 18, afin d'amener une alvéole 32 ou 32' vide en face du cruchon.

Le cruchon est ensuite introduit dans l'alvéole correspondante par un jet d'air comprimé produit par l'injecteur 58. Dès qu'il parvient dans l'alvéole 32 ou 32', le cruchon 14 se place automatiquement par gravité de telle sorte que son axe soit confondu avec l'axe incliné de l'alvéole correspondante. Par conséquent, toute rotation ultérieure des râteliers 30 et 30' ne risque pas d'entraîner une éjection accidentelle des cruchons supportés par ces râteliers.

Par ailleurs, lorsqu'on désire récupérer l'un des cruchons stockés dans les râteliers 30 et 30', on amène le cruchon correspondant en face de la fenêtre formée dans la goulotte 54 soit par une simple rotation des râteliers commandée par le moteur pas-à-pas 22, soit par une rotation commandée par ce moteur combinée avec un déplacement vertical des râteliers commandé par le vérin 18.

Ensuite, l'éjection du cruchon 14 est commandée à l'aide du vérin 42, dont l'actionnement a pour effet de faire descendre la tige de poussée 44.

Lorsque le cruchon que l'on désire récupérer est logé dans l'une des alvéoles 32 du râtelier de stockage supérieur 30, la tige de poussée 44 commande directement le basculement du levier 46 correspondant, afin d'éjecter le cruchon dans la goulotte 54 comme l'illustre la figure 1.

Lorsque le cruchon que l'on désire récupérer est situé dans le râtelier inférieur 30', le pivotement du levier basculant 46 associé à l'alvéole 32' dans laquelle est logé ce cruchon est transmis de la tige 44 au levier 46' par l'intermédiaire du tronçon de tige 50 situé au-dessus du levier 46' considéré.

La description qui précède montre que le dispositif de stockage selon l'invention permet de stocker dans un volume réduit un nombre relativement important de cruchons. De plus, la présence de ce dispositif dans une boîte d'analyses permet d'éviter la chute des cruchons dans le fond de la boîte et les inconvénients qui en découlent.

Bien entendu, l'invention n'est pas limitée à la forme de réalisation et à l'application qui viennent d'être décrites. Ainsi, on comprendra que le dispositif de stockage selon l'invention peut être utilisé pour stocker des objets à configuration sensiblement cylindrique autres que des cruchons, dans des domaines techniques très variés autres que le domaine nucléaire. Par ailleurs, le nombre des râteliers de stockage n'est pas limité à deux et le nombre des alvéoles formées dans chaque râtelier peut être inférieur ou supérieur à dix. Pour simplifier le contrôle-commande effectué par les moteurs pas-à-pas, le nombre des alvéoles est, de préférence, un multiple de cinq. Dans le cas où plus de deux râteliers superposés sont utilisés, leur décalage angulaire est inférieur à un demi-pas entre deux alvéoles successives d'un même râtelier et des tronçons de tige sont logés dans tous les râteliers, à l'exception de celui du bas, pour transmettre aux leviers basculants le mouvement de descente de la tige de poussée.

Enfin, comme on l'a illustré en 62 sur la figure 1, une protection biologique additionnelle peut être placée sur la paroi supérieure 10 de la cellule, entre le bouchon 17 et le disque 16c. Cette protection biologique additionnelle 62 assure la protection du personnel lorsqu'il intervient sur les moyens d'actionnement (vérins 18 et 42, moteur pas-à-pas 22) et sur les capteurs (non représentés) qui leur sont associés.

## Revendications

1. Dispositif de stockage d'objets (14) à configuration sensiblement cylindrique, comprenant :
- au moins un râtelier de stockage (30,30') apte à tourner autour d'un axe vertical et pourvu d'alvéoles (32, 32') aptes à recevoir les objets, circonférentiellement réparties autour de cet axe vertical ; et
- des moyens (22) de commande de rotation du râtelier autour dudit axe ;
- les alvéoles (32,32')sont ouvertes radialement vers l'extérieur, de façon à permettre une introduction et une extraction radiales des objets ;
caractérisé par le fait que :
- chaque alvéole (32,32') présente un axe incliné de façon à couper l'axe vertical du râtelier au dessus de ce dernier.

2. Dispositif selon la revendication 1, caractérisé par le fait qu'un organe éjecteur (46,46') est placé dans chaque alvéole (32,32') et comporte une partie active apte à être animée d'un mouvement sensiblement radial par rapport à l'axe vertical du râtelier (30,30'), entre une position escamotée et une position d'éjection.

3. Dispositif selon la revendication 2, caractérisé par le fait que l'organe éjecteur est un levier basculant (46,46') monté sur un axe de pivotement horizontal (48,48') placé dans le haut de l'alvéole et orienté perpendiculairement à une direction radiale par rapport à l'axe vertical du râtelier, ladite partie active étant constituée par une première branche du levier normalement orientée vers le bas, parallèlement à l'axe de l'alvéole et le long de la paroi de cette dernière la plus proche de l'axe de pivotement du levier.

4. Dispositif selon la revendication 3, caractérisé par le fait que le levier basculant (46,46') comporte une deuxième branche normalement orientée radialement vers l'axe vertical du râtelier, et selon une direction sensiblement horizontale, des moyens d'éjection (42,44,50) étant prévus pour exercer une poussée vers le bas sur la deuxième branche du levier.

5. Dispositif selon la revendication 4, caractérisé par le fait que les moyens d'éjection comprennent un vérin (42) monté sur un support (20) et une tige de poussée verticale (44) apte à se déplacer parallèlement à elle-même lors d'un actionnement du vérin, une extrémité basse de la tige de poussée étant placée au-dessus de la deuxième branche du levier basculant (46,46') d'une alvéole (32,32') située au droit d'un poste d'éjection (54) du dispositif.

6. Dispositif selon l'une quelconque des revendications précédentes, caractérisé par le fait qu'il comprend au moins deux râteliers de stockage (30,30') disposés coaxialement, l'un au-dessus de l'autre.

7. Dispositif selon la revendication 5 et 6 combinées, caractérisé par le fait que les alvéoles (32,32') des deux râteliers (30,30') sont décalées angulairement autour de leur axe vertical, les moyens d'éjection comprenant, pour chaque alvéole (32') du râtelier inférieur, un tronçon de tige verticale (50) monté coulissant entre deux alvéoles du râtelier supérieur et dont l'extrémité basse affleure la deuxième branche du levier basculant (46') de ladite alvéole du râtelier inférieur, et un moyen de rappel (52) du tronçon de tige verticale (50) dans une position haute.

8. Dispositif selon l'une quelconque des revendications 6 et 7, caractérisé par le fait que des moyens (18) sont prévus pour déplacer les râteliers de stockage (30,30') parallèlement à leur axe vertical, afin de permettre une introduction et une extraction des objets à un niveau constant.

9. Dispositif selon l'une quelconque des revendications précédentes, caractérisé par le fait qu'il comprend un poste de chargement (15) du râtelier de stockage (30,30'), incluant un injecteur d'air comprimé (58).

10. Dispositif selon l'une quelconque des revendications précédentes, caractérisé par le fait qu'il est appliqué au stockage d'objets radioactifs, le râtelier de stockage (30,30') étant placé à l'intérieur d'une cellule de confinement, tous les moyens d'actionnement (18,22,42) et les capteurs du dispositif de stockage étant placés à l'extérieur de cette cellule, une protection biologique additionnelle (62) étant apte à être placée sur la paroi (10) de la cellule, en face desdits moyens d'actionnement (18,22,42) et desdits capteurs.

## Patentansprüche

1. Vorrichtung zur Lagerung von Gegenständen mit im wesentlichen zylindrischer Form, umfassend:
- wenigstens ein Lagergestell (30,30'), drehbar um eine vertikale Achse und an seinem Umfang mit Einzellagerplätzen (32,32') zur Aufnahme von Gegenständen versehen, um diese vertikale Achse herum verteilt;
- Drehsteuereinrichtungen (22) des Gestells um die genannte Achse herum; und
- Einzellagerplätze (32,32'), die radial nach außen offen sind, um das radiale Eingeben und Entnehmen von Gegenständen zu ermöglichen;
**dadurch gekennzeichnet,**
daß jeder Einzellagerplatz (32,32') eine Achse aufweist, die so geneigt ist, daß sie die vertikale Achse des Gestells oberhalb dieses letzteren schneidet.

2. Vorrichtung nach Anspruch 1, dadurch gekennzeichnet, daß in jedem Einzellagerplatz (32,32') ein Ausstoßorgan (46,46') angebracht ist und einen aktiven Teil umfaßt, der bezüglich der vertikalen Achse des Gestells (30.30') im wesentlichen radial bewegt werden kann, zwischen einer Einzugsstellung und einer Ausstoßstellung.

3. Vorrichtung nach Anspruch 2, dadurch gekennzeichnet, daß das Ausstoßorgan ein Kipphebel (46,46') ist, gelagert auf einer horizontalen Schwenkachse (48,48'), die sich sich oben im Einzellagerplatz befindet und senkrecht zu einer in bezug auf die vertikale Achse des Gestells senkrechten Richtung, wobei der genannte aktive Teil gebildet wird durch einen ersten, normalerweise nach unten gerichteten Schenkel des Hebels, parallel zu der Achse des Einzellagerplatzes und längs der der Schwenkachse des Hebels nahesten Wand dieses letzteren.

4. Vorrichtung nach Anspruch 3, dadurch gekennzeichnet, daß der Kipphebel (46,46') einen zweiten, normalerweise radial und im wesentlichen horizontal in Richtung Vertikalachse des Gestells ausgerichteten Schenkel umfaßt, wobei Ausstoßeinrichtungen (42,44,50) vorgesehen sind, um auf den zweiten Schenkel des Hebels einen Druck nach unten auszuüben.

5. Vorrichtung nach Anspruch 4, dadurch gekennzeichnet, daß die Ausstoßeinrichtungen einen in einem Träger (20) angebrachten Zylinder (42) umfassen, dessen vertikale Druckstange sich bei einer Betätigung des Zylinders parallel zu sich selbst verschieben kann, wobei sich ein unteres Ende der Druckstange über dem zweiten Schenkel des Kipphebels (46,46') eines Einzellagerplatzes (32,32') befindet, vor dem sich, geradlinig, eine Ausstoßstation (54) der Vorrichtung befindet.

6. Vorrichtung nach einem der vorangehenden Ansprüche, dadurch gekennzeichnet, daß sie wenigstens zwei koaxial angeordnete Lagergestelle (30,30') umfaßt, das eine über dem anderen.

7. Vorrichtung nach Anspruch 5 und 6 kombiniert, dadurch gekennzeichnet, daß die Einzellagerplätze (30,32') der beiden Gestelle (30,30') um ihre vertikale Achse herum winkelversetzt sind, wobei die Ausstoßeinrichtungen für jeden Einzellagerplatz (32') des unteren Gestells ein vertikales Stangenstück (50) umfassen, das gleitend zwischen zwei Einzellagerplätzen des oberen Gestells angebracht ist und dessen unteres Ende sich in einer Ebene mit dem zweiten Schenkel des Kipphebels (46') des genannten Einzellagerplatzes des unteren Gestells trifft, und eine Rückstelleinrichtung (52) des vertikalen Stangenstücks (50) in eine obere Stellung.

8. Vorrichtung nach einem der Ansprüche 6 und 7, dadurch gekennzeichnet, daß Einrichtungen (18) vorgesehen sind, um die Lagergestelle (30,30') parallel zu ihrer vertikalen Achse zu verschieben, um eine Eingabe und eine Entnahme von Gegenständen in einer konstanten Ebene bzw. Höhe zu ermöglichen.

9. Vorrichtung nach einem der vorangehenden Ansprüche, dadurch gekennzeichnet, daß sie eine Ladestation (15) des Lagergestells (30,30') umfaßt, die eine Druckluft-Eingabeeinrichtung (58) einschließt.

10. Vorrichtung nach einem der vorangehenden Ansprüche, dadurch gekennzeichnet, daß sie für das Lagern radioaktiver Gegenstände benutzt wird, wobei das Lagergestell (30,30') sich im Innern einer Einschließungszelle befindet, alle Betätigungseinrichtungen (18,22,42) und die Sensoren der Lagervorrichtung sich außerhalb dieser Zelle befinden, und ein zusätzlicher biologischer Schutz (62) auf der Wand (10) der Zelle angebracht werden kann, gegenüber den genannten Betätigungseinrichtungen (18,22,42) und der genannten Sensoren.

## Claims

1. Device for the storage of objects (14) having a substantially cylindrical configuration comprising at least one storage rack (30, 30') which can be turned around a vertical axis and provided with cavities (32, 32') able to receive the objects circumferentially distributed around said vertical axis and means (22) for controlling the rotation of the rack around said axis, the cavities (32, 32') are open radially to the outside, so as to permit radial introduction and extraction of the objects, characterized in that each cavity (32, 32') has an axis inclined so as to intersect the vertical axis of the rack above the latter.

2. Device according to claim 1, characterized in that an ejecting member (46, 46') is placed in each cavity (32, 32') and has an active part which can be given a substantially radial movement with respect to the vertical axis of the rack (30, 30') between a retracted position and an ejection position.

3. Device according to claim 2, characterized in that the ejecting member is rocking lever (46, 46') mounted on a horizontal pivot pin (48, 48) placed at the top of the cavity and oriented perpendicular to a radial direction with respect to the vertical axis of the rack, said active part being constituted by a first branch of the lever normally oriented towards the bottom, upstream of the axis of the cavity and along the wall of the latter closest to the pivot pin of the lever.

4. Device according to claim 3, characterized in that the rocking lever (46, 46') has a second branch normally oriented radially towards the vertical axis of the rack and in a substantially horizontal direction, ejection means (42, 44, 50) being provided for exerting a downward thrust on the second lever branch.

5. Device according to claim 4, characterized in that the ejection means comprise a jack (42) mounted on a support (20) and a vertical thrust rod (44) able to move parallel to itself during a jack actuation, a bottom end of the thrust rod being placed above the second branch of the rocking lever (46, 46') of a cavity (32, 32') located to the right of an ejection station (54) of the device.

6. Device according to any one of the preceding claims, characterized in that at least two storage racks (30, 30') are arranged coaxially in superimposed manner.

7. Device according to claims 5 and 6 combined, characterized in that the cavities (32, 32') of the two racks (30, 30') are angularly displaced about their vertical axis, the ejection means having for each cavity (32') of the lower rack a vertical rod section (50) mounted in sliding manner between two cavities of the upper rack and whose lower end is flush with the second branch of the rocking lever (46') of said cavity of the lower rack and a means (52) for returning the vertical rod section (50) to the top position.

8. Device according to either of the claims 6 and 7, characterized in that means (18) are provided for displacing the storage racks (30, 30') parallel to their vertical axis in order to permit an introduction and an extraction of the objects at a constant level.

9. Device according to any one of the preceding claims, characterized in that a charging station (115) of the storage rack (30, 30') including a compressed air injector (58) is provided.

10. Device according to any one of the preceding claims, characterized in that it is applied to the storage of radioactive objects, the storage rack (30, 308) being placed within a confinement cell, all the actuating means (18, 22, 42) and the sensors of the storage device being positioned outside said cell and an additional biological protection (62) can be placed on the wall (10) of the cell facing the actuating means (18, 22, 42) and said sensors.
